# FASCICULE DE BREVET EUROPEEN

(11) **EP 2 280 210 B1**
(45) Date de publication et mention de la délivrance du brevet: **29.07.2015**
(21) Numéro de dépôt: 10162030.0
(22) Date de dépôt: 05.05.2010
(51) Int. Cl.: F16L 47/34

(54) **Ensemble de prise de branchement sur une canalisation de transport de fluide**
Abzweigungsvorrichtung für eine Kanalisation zum Transport von Flüssigkeiten
Branching assembly for a fluid transport pipe

(30) Priorité: 31.07.2009 FR 0955441
(43) Date de publication de la demande: 02.02.2011
(73) Titulaire: GDF SUEZ, 92400 Courbevoie (FR)
(72) Inventeur: Bideault, Jean-Michel, 95480, Pierrelaye (FR)
(74) Mandataire: Hamann, Jean-Christophe

(56) Documents cités:
- EP-A1- 0 536 427
- EP-A1- 1 331 429
- FR-A1- 2 869 089
- FR-A1- 2 924 962

## Description

La présente invention a pour objet un dispositif simplifiant la mise en place d'une prise de branchement sur une canalisation de transport d'un fluide, en particulier depuis le haut d'un puits de fouille.

Il est souvent nécessaire de poser des prises de branchement ou de dérivation sur des canalisations, telles que des canalisations de distribution de gaz ou d'eau. En milieu urbain, on souhaite pouvoir réaliser un puits de fouille de dimensions limitées, notamment afin de réduire la gêne causée à la circulation des piétons ou des véhicules. Dans ce but, on évite autant que possible de réaliser une tranchée permettant à une personne de descendre au fond de celle-ci et l'on privilégie systématiquement, lorsque c'est possible, une mise en place depuis le haut de puits de fouille.

Lorsque la canalisation et la prise de branchement son réalisées en matière thermofusible, telle que du polyéthylène, la solidarisation de la prise sur la canalisation s'effectue généralement par soudage. Le corps de la prise de branchement, en forme de selle, est alors équipé d'une résistance électrique connectable à une source d'alimentation électrique pour effectuer l'opération de soudage par fusion de la semelle de la prise et son soudage sur la partie du tronçon de canalisation en contact avec cette semelle. Afin que l'opération de soudage s'effectue correctement, il est nécessaire que la prise de branchement soit maintenue serrée contre la canalisation. Pour cela on prévoit une selle inférieure qui est disposée sous la canalisation et à laquelle est rattachée la selle supérieure du corps de la prise de branchement. La liaison entre le corps de la prise de branchement équipé des moyens de soudage et la selle inférieure permet d'assurer un serrage contre la canalisation dans des conditions bien définies et reproductibles, qui permettent ainsi d'obtenir des ensembles prise de branchement-selle inférieure conforme aux différentes réglementations.

La création d'un branchement nécessite donc systématiquement le rapprochement de deux selles, l'une inférieure, l'autre supérieure, cette dernière étant solidaire de la prise de branchement. Actuellement, les prises de branchement peuvent être équipées de différents types de selles : celles-ci peuvent être rigides et articulées entre elles, ou alors liées de manière à former un ensemble semi-rigide, etc. L'opération de mise en place de la selle inférieure des prises de branchement connues n'est pas aisée, que ce soit à distance, depuis le haut de la fouille, ou à proximité, lorsque les dimensions du puits de fouilles permettent à l'opérateur d'approcher suffisamment de la canalisation.

Pour réaliser l'opération de pose des selles supérieure et inférieure d'une prise de branchement, on connaît la solution proposée dans la demande de brevet publiée sous le numéro FR 2 768 213. Le dispositif décrit n'est pas satisfaisant car les opérations de pose de la prise de branchement restent complexes. Ainsi, lorsqu'il opère à proximité, l'opérateur est contraint d'amener manuellement la selle inférieure à passer sous la canalisation avant de pouvoir solidariser les deux selles. Lorsque les conditions permettent d'opérer depuis le haut de la fouille, il est connu d'utiliser un outil tel que celui décrit dans la demande de brevet publiée sous le numéro FR 2 869 089.

Cet outil comprend un support auquel sont reliés des moyens de maintien de la selle supérieure, ainsi qu'un sabot articulé en rotation par rapport au support. Des moyens d'actionnement, tels qu'un vérin, permettent de déplacer le sabot entre une position d'introduction et une position de pression. Ainsi, l'outil permet de réaliser automatiquement, depuis le haut de la fouille, la mise en place de la selle inférieure, et son maintien par le sabot, le temps que les deux selles soient solidarisées (par exemple au moyen d'éléments de visserie).

Un tel outil, bien que permettant d'obtenir une qualité de pose des prises de branchement satisfaisante, n'en reste pas moins lourd, encombrant et coûteux. En particulier, l'espace nécessaire à son fonctionnement impose de réaliser un puits de fouille suffisamment large pour permettre le dégagement latéral du sabot articulé.

L'invention vise à faciliter la pose d'une prise de branchement et à en réduire le coût tout en réduisant les dimensions nécessaires du puits de fouille. Plus précisément l'invention vise à fournir un dispositif permettant la mise en place automatique, de manière simple et rapide, de la selle inférieure et son maintien temporaire jusqu'à ce qu'elle soit solidarisée de la selle supérieure.

Ainsi, selon la revendication 1 l'invention concerne un ensemble pour prise de branchement d'une dérivation sur un tronçon d'une canalisation de transport d'un fluide, notamment de gaz. Il comprend une selle supérieure et une selle inférieure, les deux selles présentant des faces d'appui, de la forme complémentaire de celle de la surface extérieure de la canalisation, la selle inférieure étant articulée sur la selle supérieure, la selle inférieure étant solidaire d'un levier de basculement apte à venir prendre appui sur une partie supérieure du tronçon de la canalisation afin de provoquer le basculement de la selle inférieure d'une position ouverte vers une position fermée, dans laquelle les deux selles enserrent la canalisation, le basculement du levier et de la selle inférieure s'opérant par effet de levier dû au rapprochement de la selle supérieure et de la surface supérieure de la canalisation.

Dans une réalisation, le levier de basculement est déporté par rapport à l'ensemble formé par les selles supérieure et inférieure, selon la direction de l'axe de rotation.

Dans une réalisation, la longueur du levier de basculement est supérieure ou égale au huitième de la circonférence de la canalisation.

Dans une réalisation, la longueur du levier de basculement est inférieure ou égale au quart de la circonférence de la canalisation.

Dans une réalisation, le levier de basculement présente un profil incurvé.

Dans une réalisation, le levier de basculement est incurvé selon un rayon de courbure légèrement inférieur au rayon de la canalisation, par exemple inférieur d'au moins 0.5 mm.

Dans une réalisation, l'ensemble pour prise de branchement comprend des moyens de retenue de la selle inférieure sur la selle supérieure permettant de réaliser une fixation amovible par jonction des deux selles.

Dans une réalisation, les moyens de retenue sont des moyens de clipsage.

Dans une réalisation, les moyens de retenue comprennent une tige crantée solidaire de la selle inférieure et apte à coopérer avec un trou de passage solidaire de la selle supérieure.

Dans une réalisation, les moyens de retenue comprennent une tige crantée solidaire de la selle inférieure et apte à coopérer avec une portion d'un bord libre de la selle supérieure.

Dans une réalisation, les moyens de retenue sont doubles.

Dans une réalisation, le levier de basculement est fixé de manière amovible à la selle inférieure, par exemple par clipsage.

Dans une réalisation, l'ensemble pour prise de branchement comprend deux leviers de basculement, disposés de part et d'autre de la selle inférieure.

L'invention concerne également une prise de branchement comprenant un fût, une conduite de dérivation positionnée sur le fût, et pourvue d'un ensemble de prise de branchement tel que défini ci-dessus.

L'invention va apparaître encore plus clairement dans la description qui va suivre, faite en référence aux dessins annexés dans lesquels :
- les figures 1a et 1b représentent une prise de branchement conforme à l'invention, respectivement en positions ouverte et fermée. ;
- les figures 2a et 2b représentent deux prises de branchement, respectivement équipées de deux variantes de réalisation de l'invention ;
- la figure 3 représente une variante de réalisation de l'invention ;
- la figure 4 est une vue en perspective d'une prise de branchement conforme à l'invention, en position fermée sur une canalisation ;
- la figure 5 représente la prise de branchement de la figure 4 en position ouverte.

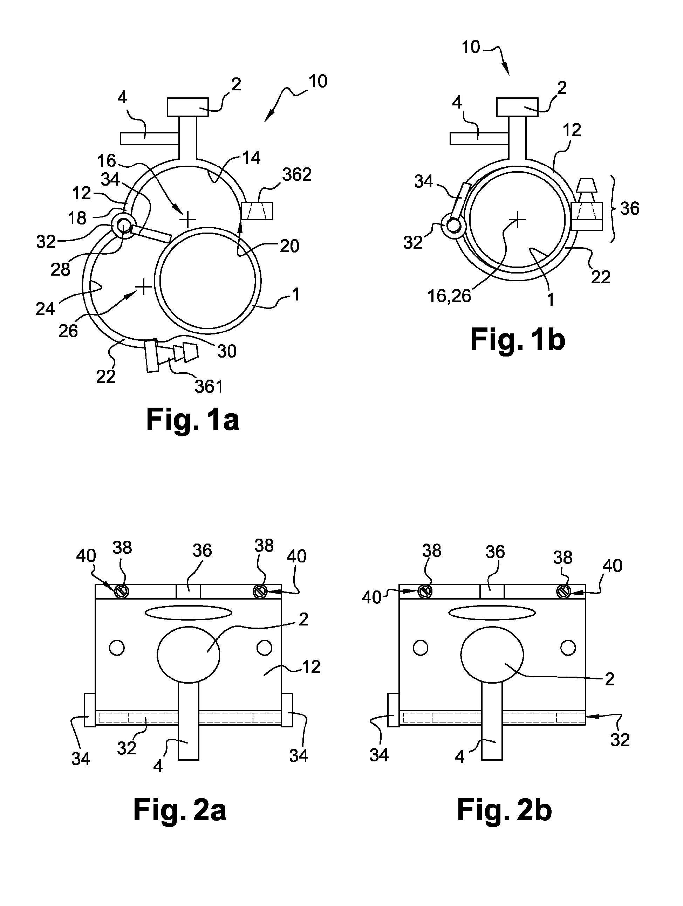

Les figures 1a et 1b montrent une prise de branchement 10 qui comprend une selle supérieure ou principale 12 et une selle inférieure ou de fixation 22.

La selle principale 12 présente une surface d'appui 14 sensiblement hémicylindrique de section circulaire présentant un axe d'allongement 16, un bord de maintien 18 et un bord libre 20. Le bord de maintien 18 et le bord libre 20 sont disposés de part et d'autre de la surface d'appui 14 et s'étendent suivant l'axe d'allongement 16. Un fût 2 s'étend sensiblement perpendiculairement à l'axe d'allongement 16 et présente un passage intérieur débouchant dans la surface d'appui 14, sensiblement perpendiculairement à cette dernière. Ledit passage intérieur communique avec une conduite de dérivation 4 destinée à être reliée à un nouveau point de branchement.

La selle de fixation 22 présente une surface d'appui 24 et une surface extérieure 25 sensiblement hémicylindriques de section circulaire présentant un axe d'allongement 26, un bord de maintien 28 et un bord libre 20. La surface d'appui 24 de la selle inférieure est sensiblement complémentaire de la surface d'appui 14 de la selle supérieure 12. Le bord de maintien 28 et le bord libre 30 sont disposés de part et d'autre de la surface d'appui 24 et de la surface extérieure 25. Ils s'étendent sensiblement suivant l'axe d'allongement 26.

Les selles inférieure et supérieure sont reliées entre elles à proximité de leur bord de maintien de manière que la selle inférieure 22 puisse pivoter aisément par rapport à la selle supérieure 12 autour d'un axe sensiblement parallèle à l'axe d'allongement 16. Dans l'exemple, les deux selles sont articulées en rotation autour d'un axe de rotation 32, par exemple au moyen d'une articulation de type chape. Tout autre moyen assurant une rotation aisée de la selle inférieure peut bien entendu être substitué, comme par exemple une liaison semi-rigide ou une liaison souple.

Dans l'exemple, l'axe de rotation 32 est disposé de sorte que le plan médian séparant les deux selles hémisphériques est sensiblement perpendiculaire à l'axe du fût 2. En d'autres termes, lorsque la prise de branchement est fixée sur une canalisation (cf. figure 1b), l'angle entre les rayons passant respectivement par l'axe de rotation 32 et par l'axe du fût 2 est sensiblement égal à 90°. Dans cette configuration, lorsque la prise de branchement est correctement positionnée, l'axe du fût 2 est sensiblement vertical, et le plan horizontal passant par l'axe de rotation 32 passe également de préférence par l'axe au niveau duquel se rejoignent les bords libres des deux selles.

À proximité de l'axe d'articulation 32 est disposé, sur la selle inférieure, un levier de basculement 34 lié rigidement en rotation à la selle inférieure. Ce levier est déporté par rapport à l'ensemble formé par les deux selles selon la direction formée par l'axe d'articulation 32, et forme une saillie en direction de l'intérieur de l'ensemble formé par les deux selles lorsque celles-ci sont en position ouverte, telle que représenté sur la figure 1a.

La figure 1a montre la première phase de la mise en place de la prise de branchement : celle-ci est descendue progressivement vers la canalisation 1, la selle inférieure étant libre et pendante. Conformément à l'invention, en continuant la progression, le levier de basculement vient appuyer sur la partie supérieure d'un tronçon de canalisation principale 1, afin d'entraîner la rotation de la selle inférieure lors de la descente du dispositif 10. Comme le montre la figure 1a, lorsqu'un opérateur assure la descente du dispositif 10 vers la canalisation principale, en maintenant la selle supérieure 12 sensiblement dans l'axe de la canalisation, le levier de basculement 34 vient en contact avec la partie supérieure de la canalisation 1. Si la descente du dispositif se poursuit (sous l'action de la seule gravité ou en exerçant un effort), le levier entraîne alors la rotation de la selle inférieure 22 vers sa position fermée représentée à la figure 1 b.

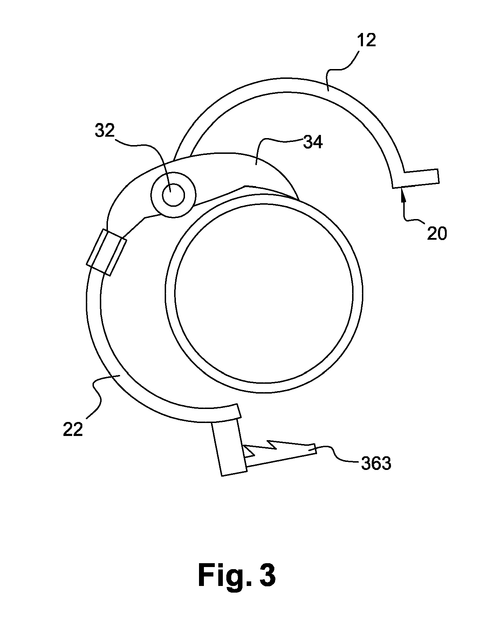

Des moyens de retenue 36 de la selle inférieure 22 sont prévus sur les bords libres 20, 30 des deux selles 12, 22, ces moyens permettant d'assurer une fixation temporaire des deux bords libres, et donc de la selle inférieure sur la selle supérieure. Ces moyens de retenue sont par exemple des moyens de clipsage. Dans l'exemple des figures 1a et 1b, les moyens de retenue 36 comprennent une tige crantée 361 disposée sur la selle inférieure et un trou de passage 362 de ladite tige solidaire de la selle supérieure. Le trou de passage 362 est conformé de manière à permettre un passage aisé de la tige crantée 361 dans le sens de la fermeture de la prise de branchement 10 et à maintenir cette position fermée de manière sûre, tout en réalisant une fixation amovible par un opérateur. La figure 3 montre une autre variante de réalisation des moyens de retenue 36, dans laquelle une tige crantée 363 est conformée de manière à pouvoir coopérer directement avec une portion du bord libre 20 de la selle supérieure, sans avoir recours à un trou de passage. Dans ce cas, la forme du bord libre 20 est avantageusement de forme biseautée (tel que visible notamment sur la figure 3), afin de faciliter le passage de la tige crantée dans le sens de la fermeture. Quelle que soit leur forme, les moyens de retenue de retenue 36 pourront être doubles (par exemple : deux tiges 361 coopérant respectivement avec deux trous de passage 362.)

Comme exposé ci-dessus, une selle inférieure conforme à l'invention se met ainsi automatiquement en place et se solidarise, également de manière automatique, à la selle supérieure, sous le seul effet du basculement imposé par le levier 34. Ainsi, un opérateur seul est à même de réaliser l'opération de mise en place d'une prise de branchement depuis le haut d'une fouille, de manière simple, et sans utiliser d'outil.

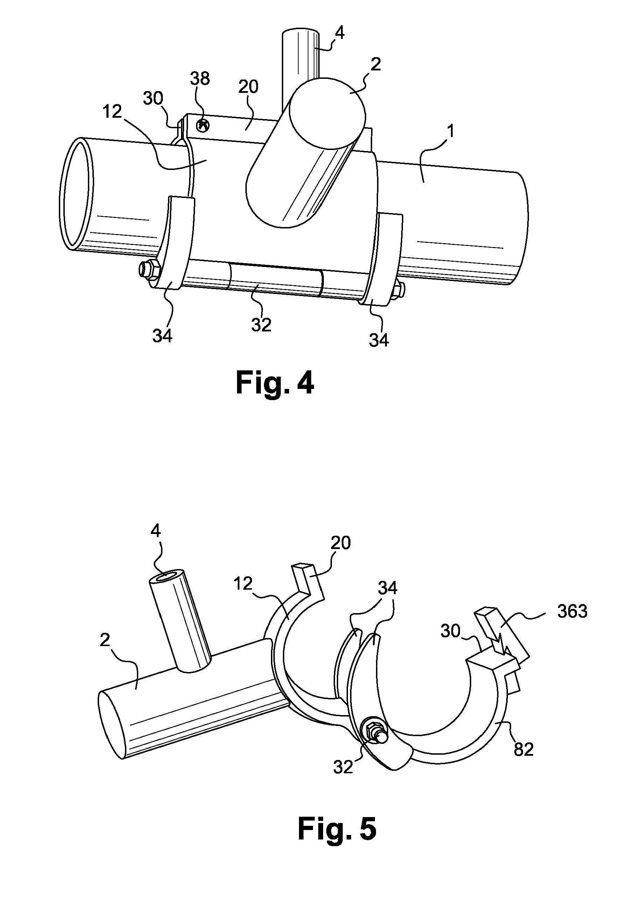

La forme et la dimension du levier 34 est adaptée à sa fonction : en particulier, sa longueur, qui sera fonction du diamètre de la canalisation considérée, doit être suffisante pour venir appuyer sur la partie supérieure de la canalisation lorsque la prise de branchement est relativement proche du plan vertical passant par l'axe de la canalisation. Une longueur supérieure ou égale à environ un huitième de la circonférence de la canalisation considérée permet de répondre à cette contrainte. En outre, la longueur du levier de basculement 34 doit assurer un bras de levier suffisant pour permettre un basculement aisé de la selle inférieure en demandant un effort raisonnable à l'opérateur. Toutefois, il n'apparait pas utile que la longueur du levier de basculement soit supérieure au quart de la circonférence de la canalisation considérée. De plus, comme montré sur la figure 5, sa forme peut être incurvée, d'un rayon adapté à la surface externe de la canalisation 1 afin d'assurer une surface de contact maximale entre le levier 34 et la canalisation. Dans une variante, il est avantageux que le levier de basculement ait un effet légèrement serrant. Pour cela, on s'assurera que le profil du levier est légèrement plus proche de la canalisation que le profil de la selle supérieure. Par exemple, lorsque le levier présente une forme incurvée, un diamètre intérieur d'une valeur inférieure d'environ 1 millimètre par rapport au diamètre de la canalisation considérée permettra d'obtenir l'effet de serrage désiré.

Selon l'invention, la selle inférieure 22 peut être équipée d'un seul ou de plusieurs leviers de basculement 34. Comme montré sur les figures 2a, 4 et 5, on pourra en effet prévoir deux leviers de basculement, qui permettront de mieux répartir la charge sur la canalisation, et également éviter un porte à faux de l'ensemble lorsque l'opérateur transmet son effort par l'intermédiaire du fût.

Une fois que la selle inférieure est fixée grâce aux moyens de retenue 36, l'opérateur pourra, selon les cas, procéder directement à la soudure de la prise de branchement sur la canalisation, ou, profiter de la fixation provisoire pour réaliser une fixation plus sûre (par exemple au moyen d'éléments de visserie 38 passant dans des trous 40 prévus à cet effet dans les bords libres des deux selles, comme montré sur les figures 2a et 2b), avant de continuer l'installation de la prise de branchement.

Dans une variante représentée à la figure 3, le dispositif est fixé de manière amovible à la selle inférieure 22, celui-ci peut donc être retiré après soudage de la prise, puis réutilisé.

Le dispositif objet de l'invention présente donc l'avantage de permettre la pose d'une prise de branchement sans les outils utilisés conventionnellement, depuis le haut d'un puits de fouille. Son coût de fabrication est faible, et de plus, dans sa version amovible, celui-ci est réutilisable. La mise en oeuvre de l'invention est simple et aisée, pour un temps d'intervention réduit pour l'opérateur.

## Revendications

1. Ensemble pour prise de branchement (10) d'une dérivation sur un tronçon d'une canalisation (1) de transport d'un fluide, notamment de gaz, l'ensemble comprenant une selle supérieure (12) et une selle inférieure (22), les deux selles présentant des faces d'appui (14, 24) de forme complémentaire de celle de la surface extérieure de la canalisation (1), la selle inférieure (22) étant articulée (32) sur la selle supérieure (12),
**caractérisé en ce que** la selle inférieure (22) est liée rigidement en rotation à un levier de basculement (34) apte à venir prendre appui sur une partie supérieure du tronçon de la canalisation (1) afin de provoquer le basculement de la selle inférieure (22) d'une position ouverte vers une position fermée, dans laquelle les deux selles enserrent la canalisation (1), la selle supérieure étant dépourvue de levier de basculement, le basculement du levier (34) et de la selle inférieure (22) s'opérant par effet de levier dû au rapprochement de la selle supérieure (12) et de la surface supérieure de la canalisation (1).

2. Ensemble pour prise de branchement selon la revendication 1, dans lequel le levier de basculement (34) est déporté par rapport à l'ensemble formé par les selles supérieure et inférieure, selon la direction de l'axe de rotation de l'articulation (32).

3. Ensemble pour prise de branchement selon la revendication 1 ou 2, dans lequel la longueur du levier de basculement (34) est supérieure ou égale au huitième de la circonférence de la canalisation (1).

4. Ensemble pour prise de branchement selon la revendication 1, 2 ou 3, dans lequel la longueur du levier de basculement (34) est inférieure ou égale au quart de la circonférence de la canalisation (1).

5. Ensemble pour prise de branchement selon l'une des revendications 1 à 4, dans lequel le levier de basculement (34) présente un profil incurvé.

6. Ensemble pour prise de branchement selon la revendication 5, dans lequel le levier de basculement (34) est incurvé selon un rayon de courbure légèrement inférieur au rayon de la canalisation (1), par exemple inférieur d'au moins 0,5 millimètre.

7. Ensemble pour prise de branchement (10) selon l'une des revendications 1 à 6, comprenant des moyens de retenue (36) de la selle inférieure (22) sur la selle supérieure (12) permettant de réaliser une fixation amovible par jonction des deux selles (12, 22).

8. Ensemble pour prise de branchement (10) selon la revendication 7, dans lequel les moyens de retenue sont des moyens de clipsage.

9. Ensemble pour prise de branchement (10) selon la revendication 8, dans lequel les moyens de retenue (36) comprennent une tige crantée (361) solidaire de la selle inférieure (22) et apte à coopérer avec un trou de passage (362) solidaire de la selle supérieure (12).

10. Ensemble pour prise de branchement (10) selon la revendication 8, dans lequel les moyens de retenue (36) comprennent une tige crantée (363) solidaire de la selle inférieure (22) et apte à coopérer avec une portion d'un bord libre (20) de la selle supérieure (12).

11. Ensemble pour prise de branchement (10) selon l'une des revendications 7 à 10, dans lequel les moyens de retenue sont doubles.

12. Ensemble pour prise de branchement (10) selon l'une des revendications 1 à 11, dans lequel le levier de basculement est fixé de manière amovible à la selle inférieure (22), par exemple par clipsage.

13. Ensemble pour prise de branchement (10) selon l'une des revendications précédentes, comprenant deux leviers de basculement (24), disposés de part et d'autre de la selle inférieure (22).

14. Prise de branchement (10) comprenant un fût (2), une conduite de dérivation (4) positionnée sur le fût (2), et pourvu d'un ensemble de prise de branchement selon l'une des revendications 1 à 13.

## Patentansprüche

1. Baugruppe für das Anschlussstück (10) einer Abzweigung an einem Kanalabschnitt (1) zum Transport eines Fluids, im Speziellen von Gas, wobei die Baugruppe eine obere Schale (12) und einer untere Schale (22) umfasst, wobei die beiden Schalen Auflageflächen (14, 24) in einer ergänzenden Form zu jener der Außenfläche des (1) Kanals aufweisen, wobei die untere Schale (22) mit einem Gelenk (32) auf der oberen Schale (12) befestigt ist,
**dadurch gekennzeichnet, dass** die untere Schale (22) drehsteif mit einem Schwenkhebel (34) verbunden ist, der in der Lage ist, sich an einen oberen Teil des Kanalabschnitts (1) anzulegen, um eine Schwenkbewegung der unteren Schale (22) von einer offenen Stellung in eine geschlossene Stellung hervorzurufen, in der die beiden Schalen den Kanal (1) einklemmen, wobei die obere Schale keinen Schwenkhebel aufweist, und die Schwenkbewegung des Hebels (34) und der unteren Schale (22) durch die Hebelwirkung aufgrund der Annäherung der oberen Schale (12) und der Oberfläche des Kanals (1) erfolgt.

2. Anschlussstück-Baugruppe nach Anspruch 1, bei der der Schwenkhebel (34) im Verhältnis zur Baugruppe, die durch die obere und die untere Schale gebildet wird, in die Richtung der Drehachse des Gelenks (32) gedrückt wird.

3. Anschlussstück-Baugruppe nach Anspruch 1 oder 2, bei der die Länge des Schwenkhebels (34) größer oder gleich dem Achtel des Umfangs des Kanals (1) ist.

4. Anschlussstück-Baugruppe nach Anspruch 1, 2 oder 3, bei der die Länge des Schwenkhebels (34) kleiner oder gleich dem Viertel des Umfangs des Kanals (1) ist.

5. Anschlussstück-Baugruppe nach einem der Ansprüche 1 bis 4, bei der der Schwenkhebel (34) ein gekrümmtes Profil aufweist.

6. Anschlussstück-Baugruppe nach Anspruch 5, bei der der Schwenkhebel (34) gemäß einem Biegeradius gekrümmt ist, der etwas kleiner ist, als der Radius des Kanals (1), zum Beispiel um mindestens 0,5 Millimeter kleiner.

7. Anschlussstück-Baugruppe (10) nach einem der Ansprüche 1 bis 6, Rückhaltevorrichtungen (36) für die untere Schale (22) auf der oberen Schale (12) umfassend, anhand derer eine Befestigung erstellt werden kann, die durch die Verbindung der beiden Schalen (12, 22) lösbar ist.

8. Anschlussstück-Baugruppe (10) nach Anspruch 7, bei der die Rückhaltevorrichtungen Klippvorrichtungen sind.

9. Anschlussstück-Baugruppe (10) nach Anspruch 8, bei der die Rückhaltevorrichtungen (36) einen verzahnten Nippel (361) umfassen, der fest mit der unteren Schale (22) verbunden, und in der Lage ist, mit einem Durchgangsloch (362) zusammenzuwirken, das fest an der oberen Schale (12) angebracht ist.

10. Anschlussstück-Baugruppe (10) nach Anspruch 8, bei der die Rückhaltevorrichtungen (36) eine Zahnstange (363) umfassen, die fest mit der unteren Schale (22) verbunden, und in der Lage ist, mit einem Abschnitt eines freien Randes (20) der oberen Schale (12) zusammenzuwirken.

11. Anschlussstück-Baugruppe (10) nach einem der Ansprüche 7 bis 10, bei der die Rückhaltevorrichtungen doppelt vorhanden sind.

12. Anschlussstück-Baugruppe (10) nach einem der Ansprüche 1 bis 11, bei der der Schwenkhebel abnehmbar, zum Beispiel ausklippbar, an der unteren Schale (22), befestigt ist.

13. Anschlussstück-Baugruppe (10) nach einem der vorherigen Ansprüche, zwei Schwenkhebel (24) umfassend, die beiderseits der unteren (22) Schale angeordnet sind.

14. Anschlussstück (10), einen Schaft (2) und eine Abzweigungsleitung (4) umfassend, die auf dem Schaft (2) angebracht, und mit einer Anschlussstück-Baugruppe nach einem der Ansprüche 1 bis 13 versehen ist.

## Claims

1. Assembly for a branch plug (10) of a derivation on a portion of a fluid transport pipe (1), notably a gas transport pipe, said assembly comprising an upper saddle (12) and a lower saddle (22), both saddles having supporting faces (14, 24) the form of said supporting faces being complementary to that of the external surface of the pipe (1), the lower saddle (22) being articulated (32) to the upper saddle (12), **characterised in that** the lower saddle (22) is firmly fixed to a tilting lever (34) able to press an upper part of the portion of the pipe (1) in order to cause the lower saddle (22) to tilt from an open position to a closed position, in which both saddles encircle the pipe (1), the upper saddle (12) having no tilting lever, the tilting of the lever (34) and the lower saddle (22) being due to the leverage effect generated by the upper saddle (12) and the upper surface of the pipe (1) getting closer.

2. Assembly for a branch plug according to claim 1, wherein the tilting lever (34) is out-of-line from the assembly formed by the upper and lower saddles, in the direction of the articulation rotation axis (32).

3. Assembly for a branch plug according to claim 1 or 2, wherein the length of the tilting lever (34) is superior or equal to the eighth of the circumference of the pipe (1).

4. Assembly for a branch plug according to claim 1, 2 or 3, wherein the length of the tilting lever (34) is inferior or equal to the quarter of the circumference of the pipe (1).

5. Assembly for a branch plug according to any one of the claims 1 to 4, wherein the tilting lever (34) has an incurved profile.

6. Assembly for a branch plug according to claim 5, wherein the tilting lever (34) is incurved with a curvature radius which is slightly, for example at least 0.5 mm, shorter than the radius of the pipe (1).

7. Assembly for a branch plug (10) according to any one of the claims 1 to 6, comprising retaining means (36) for retaining the lower saddle (22) on the upper saddle (12) for carrying out a removable junction fixation of both saddles (12, 22).

8. Assembly for a branch plug (10) according to claim 7, wherein the retaining means are snapping means.

9. Assembly for a branch plug (10) according to claim 8, wherein the retaining means (36) comprise a toothed shaft (361) firmly fixed to the lower saddle (22) and able to cooperate with a passage hole (362) in the upper saddle.

10. Assembly for a branch plug (10) according to claim 8, wherein the retaining means (36) comprise a toothed shaft (363) firmly fixed to the lower saddle (22) and able to cooperate with a portion of a free edge (20) of the upper saddle (12).

11. Assembly for a branch plug (10) according to any one of the claims 7 to 10, wherein the retaining means are doubled.

12. Assembly for a branch plug (10) according to any one of the claims 1 to 11, wherein the tilting lever is fixed in a removable manner to the lower saddle (22), for example by a snapping action.

13. Assembly for a branch plug (10) according to any one of the preceding claims, comprising two tilting levers (24), arranged on both sides of the lower saddle (22).

14. Branch plug (10) comprising a barrel (2), a derivation pipe (4) positioned on the barrel (2), and provided with a branch plug assembly according to 1 to 13.
